# EUROPÄISCHE PATENTSCHRIFT

(11) **EP 1 812 518 B1**
(45) Veröffentlichungstag und Bekanntmachung des Hinweises auf die Patenterteilung: **13.02.2008**
(21) Anmeldenummer: 06776620.4
(22) Anmeldetag: 04.08.2006
(51) Int. Cl.: C09C 1/00, C09C 3/08

(54) **OBERFLÄCHENBELEGTE PERLGLANZPIGMENTE, VERFAHREN ZU DEREN HERSTELLUNG UND DEREN VERWENDUNG**
SURFACE-COATED PEARLESCENT PIGMENTS, METHOD FOR THE PRODUCTION THEREOF, AND USE THEREOF
PIGMENTS A LUSTRE NACRE POURVUS D'UN REVETEMENT SUPERFICIEL, LEUR PROCEDE DE PRODUCTION, ET LEUR UTILISATION

(30) Priorität: 05.08.2005 DE 102005037612
(43) Veröffentlichungstag der Anmeldung: 01.08.2007
(73) Patentinhaber: Eckart GmbH, 90763 Fürth (DE)
(72) Erfinder: KAUPP, Günter, 91284 Neuhaus (DE)
(74) Vertreter: Walcher, Armin
(86) Internationale Anmeldenummer: PCT/EP2006/007749
(87) Internationale Veröffentlichungsnummer: WO 2007/017199

(56) Entgegenhaltungen:
- EP-A1- 0 707 051
- EP-A2- 0 675 176
- DE-B- 1 234 234

## Beschreibung

Die Erfindung betrifft oberflächenmodifizierte Perlglanzpigmente, die mit organischen Phosphonsäuren, organischen phosphinigen Säuren und/oder deren Estern belegt sind. Des weiteren betrifft die Erfindung einer Verfahren zur Herstellung dieser oberflächenmodifizierten Perlglanzpigmente als auch deren Verwendung.
Seit einigen Jahren werden für die Beschichtung von Oberflächen vielfach Pulverlacke eingesetzt. Es handelt sich dabei um feinteilige Kunststoffpulver, die nach verschiedenen Verfahren aufgebracht werden können. Beispielsweise kann der Pulverlack durch elektrostatische Aufladung auf das gegensinnig geladene zu beschichtende Teil gesprüht werden, wobei sich ein dünner Film ausbildet, der durch Erwärmen bis zum Erweichungspunkt des Pulvers gehärtet wird. Eine andere Möglichkeit des Aufbringens ist die tribostatische Auftragung (Aufladung durch Reibung in der Sprühpistole). Gegenüber konventionellen lösungsmittelbasierenden Lacksystemen besitzen Pulverlacke den Vorteil, keinerlei Lösungsmittelemissionen zu verursachen und aufgrund ihrer Recyclierbarkeit praktisch keinen Overspray zu haben.
Pulverlacke können mit Farb- und Effektpigmenten wie Metalleffektpigmenten oder Perlglanzpigmenten pigmentiert werden, um dekorative Effekte zu erzielen.

Gewöhnliche organische oder anorganische Pigmente sowie im Pulverlack übliche Inhaltsstoffe, wie Bindemittel, Härter, Füllstoffe, Additive, etc, werden zunächst in einem Mischer vorgemischt und anschließend extrudiert. Die hierbei anfallenden Chips werden in einer Stiftmühle oder Prallfuttermühle oder ähnlichen Aggregaten gemahlen.

Werden plättchenförmige Effektpigmente, wie beispielsweise Perlglanzpigmente oder Metalleffektpigmente, in Pulverlacken eingesetzt, so müssen sie in einem schonenderen Verfahren in den Pulverlack eingearbeitet werden. Andernfalls brechen die scherempfindlichen Pigmente und verlieren damit ihre charakteristischen Eigenschaften.

In der industriellen Praxis sind zwei Verfahren der Einarbeitung gängig. Bei dem ersten Verfahren, dem Dry-blend Verfahren, werden die Pulverlackpartikel und die Effektpigmente einfach miteinander vermischt. Nachteil dieses Verfahrens ist das separate Vorliegen von Pulverlack- und Effektpigmentpartikeln. Bedingt durch die unterschiedliche Form und chemische Natur von Pulverlackpartikeln und Effektpigmenten kommt es häufig bei der elektrostatischen Applikation zu Separationserscheinungen. Damit einher geht ein Verlust der Recyclierbarkeit des nicht aufgebrachten Pulverlackes, da es zu einer relativen Veränderung der Mengenanteile von Pulveriackpartikeln zu Effektpigmenten in dem Pulverlack kommt. Eine Wiederverwertung des nicht aufgebrachten Pulverlacks in einer erneuten Pulverlackierung würde zu einer Lackschicht mit veränderter Qualität führen. Zudem können sich in der Pulverlackpistole Teilchenaggregate aufbauen, die zu großen Aggregaten ("Spuckern") auf der Beschichtung und damit zu einem unakzeptablen optischen Erscheinungsbild führen.

Das zweite Verfahren wird als Bondingverfahren bezeichnet. Hier wird der Pulverlack in Gegenwart des Perlglanzpigmentes bis kurz unter seine Glastemperatur erhitzt und dadurch partiell aufgeschmolzen. Dadurch kommt es zu einer physikalischen Adhäsion der Perlglanzpigmente an die Pulverlackpartikel und demzufolge zur Bildung von Kompositpartikel. Hierdurch werden i.d.R. die beim Dry-blend vorhandenen Nachteile vermindert. Jedoch ist der Bondingprozeß meist nicht vollständig, d.h. es verbleiben in der Pulverlackierung einzelne, nicht mit dem Bindemittel verbundene Perlglanzpigmente. Des weiteren ist nachteilig, daß dieses Verfahren nur schlecht bei Fraktionen mit größeren Perlglanzpigmenten anwendbar ist. Hier sind die Perlglanzpigmente im Vergleich zu den Pulverlackbindemittelpartikeln so groß, dass nur ein Teil genügend fest haftet.

Die EP 0 721 005 B1 beschreibt Pigmentpräparationen, die Perlglanzpigmente, ein Phosphatderivat sowie sphärische Teilchen enthalten. Derartige Präparationen sollen vor allem im Druckbereich Vorteile bringen. Anwendungen in Pulverlacken oder Bronzierungen wurden nicht beschrieben.

Mit langkettigen gesättigten Fettsäuren belegte Perlglanzpigmente werden in der EP 0 285 977 B1 offenbart. Derartige Perlglanzpigmente besitzen leafing-Eigenschaften und können vorteilhaft in Bronzierungen verwendet werden.

Mit Alkylsilanen beschichtete Perlglanzpigmente mit leafing-Eigenschaften werden in der EP 0 492 223 B1 beschrieben. Diese Pigmente sollen zur Vergilbungsinhibierung von pigmentierten Kunststoffen verwendet werden.

Diese beiden bekannten oberflächenmodifizierten Perlglanzpigmente mit leafing-Eigenschaften zeigen in Pulverlacken jedoch Nachteile. Die optischen Effekte wie Helligkeit oder Flop werden nicht wesentlich verbessert. Erst bei sehr hohen Mengen an Fettsäuren oder Alkylsilanen erhält man ein starkes leafing-Verhalten und damit einen brillanteren optischen Eindruck. Hier tritt jedoch eine mangelhafte Abriebbeständigkeit auf. Mit Alkylsilanen beschichtete Perlglanzpigmente sind zudem nicht mit genügender Reproduzierbarkeit applizierbar.

DE 197 08 167 A1 offenbart eine Pigmentpräparation, die unter anderem oberflächenaktive Substanzen, wie Fettsäuren und Fluortenside enthält. Durch Verwendung von oberflächenaktiven Substanzen sollen nichtstaubende homogene Pigmentpräparationen erhalten werden.

Aufgabe der vorliegenden Erfindung ist es, Perlglanzpigmente bereitzustellen, die die vorstehend genannten Nachteile der bekannten Pigmente bei der Anwendung in Pulverlacken nicht aufweisen. Die Perlglanzpigmente sollen im Pulverlack gut verarbeitbar sein, in der Pulverlackierung eine gute Orientierung besitzen und in der durch Pulverlackierung hergestellten Beschichtung eine erhöhte Brillanz, Helligkeit und Flop aufweisen.

Eine weitere Aufgabe ist es, ein einfaches kostengünstiges Verfahren zur Herstellung derartiger Perlglanzpigmente aufzufinden.

Die Aufgabe wurde gelöst durch Bereitstellung von oberflächenmodifizierten Perlglanzpigmenten, deren Oberfläche mit wenigstens einer organischen Phosphor-haltigen Verbindung mit der allgemeinen Formel (I)

R¹R²P(O)(OR³) (I)

und/oder der allgemeinen Formel (II)

R¹P(O)(OR³)(OR⁴) (II)

versehen sind,
wobei
R¹ und R² unabhängig voneinander Wasserstoff oder ein organischer Rest mit 1 bis 30 C-Atomen sind, mit der Maßgabe, daß R¹ und R² nicht gleichzeitig Wasserstoff sind, und
R³ und R⁴ unabhängig voneinander H oder Alkyl mit 1 - 10 C-Atomen sind.

Verbindungen der allgemeinen Formel (I) sind organische Derivate von phosphiniger Säure, sogenannte organische phosphinige Säure, bei der die organischen Reste R¹ und R² direkt an das Phosphoratom gebunden sind. Wenn der Rest R³ Alkyl mit 1 bis 10 C-Atomen ist, handelt es sich das organische Derivat eines Esters von phosphiniger Säure. Wenn R³ Wasserstoff ist, handelt es sich um ein organisches Derivat der freien phosphinigen Säure.

Verbindungen der allgemeinen Formel (II) sind organische Derivate von Phosphonsäure, sogenannte organische Phosphonsäure, bei der der organische Rest R¹ direkt an das Phosphoratom gebunden ist. Wenn die Reste R³ und R⁴ Alkyl mit 1 bis 10 C-Atomen sind, handelt es sich um ein organisches Derivat eines Diesters von Phosphonsäure. Wenn R³ Wasserstoff und R⁴ Alkyl mit 1 bis 10 C-Atomen ist, handelt es sich um ein organisches Derivat eines Monoesters von Phosphonsäure. Wenn R³ und R⁴ Wasserstoff sind, handelt es sich um ein organisches Derivat der freien Phosphonsäure.

Es hat sich überraschend gezeigt, daß die erfindungsgemäßen Perlglanzpigmente neben guten anwendungstechnischen Eigenschaften wie gutem Verlauf und guter Verarbeitbarkeit auch ein starkes Aufschwimmverhalten verbunden mit einer ausgezeichneten parallelen Ausrichtung im Pulverlack zeigen, wodurch bei verbessertem optischem Effekt eine niedrigere Pigmentierung als gewöhnlich möglich ist. Aufgrund der niedrigeren Pigmentierung, d.h. einem geringeren Pigmentgehalt in dem Pulverlack, können bei einem vergleichbaren oder verbesserten optischen Erscheinungsbild beträchtliche Kosten eingespart werden. Darüber hinaus sind die Brillanz und Helligkeit sowie der Helligkeitsflop gegenüber konventionellen Perlglanzpigmenten stark erhöht.

Die erfindungsgemäßen Perlglanzpigmente sind oberflächig mit 0,05 bis 10 Gew.-% mit organischer phosphiniger Säure und/oder organischer Phosphonsäure und/oder deren Estern belegt. Erfindungsgemäß können auch Gemische von organischen phosphinigen Säuren und/oder organischen Phosphonsäuren und/oder deren jeweiligen Ester verwendet werden. Gemäß einer Ausführungsform erfolgt die Oberflächenmodifizierung unter Verwendung einer organischen phosphinigen Säure oder einer organischen Phosphonsäure oder deren jeweiliger Esters.

Die nachstehenden Ausführungen sind somit dahingehend zu verstehen, daß anstelle einer einzelnen organischen phosphinigen Säure oder einer einzelnen organischen Phosphonsäure bzw. deren Ester jeweils auch Gemische verwendet werden können und umgekehrt.

Bevorzugt beträgt der Mengenanteil an organischer phosphiniger Säure und/oder organischer Phosphonsäure und/oder deren Estern 0,1 bis 5 Gew.-% und besonders bevorzugt 0,5 bis 3 Gew.-%, jeweils bezogen auf das Gewicht des gesamten Perlglanzpigments. Bei Mengen von weniger als 0,1 Gew.-% kann die Wirkung der organischen phosphinigen Säure und/oder Phosphonsäure und/oder deren Estern zu gering sein, während oberhalb von 10 Gew.-% die Oberfläche der Perlglanzpigmente zu hydrophob wird, so das Enthaftungserscheinungen und eine beginnende mangelhafte Abriebbeständigkeit im Pulverlack auftritt.

Die erfindungsgemäßen Perlglanzpigmente weisen eine mittlere Pigmentgröße von 1 bis 400 µm, bevorzugt von 2 bis 150 µm und besonders bevorzugt von 5 bis 50 µm auf. Mit der Pigmentgröße wird die durchschnittliche Länge der Perlglanzpigmente angegeben.

Als Perlglanzpigmente können alle gängigen kommerziell erhältlichen Pigmente eingesetzt werden.

Die Perlglanzpigmente weisen ein plättchenförmiges Substrat auf, welches vorzugsweise aus der Gruppe, bestehend aus Glimmer, Talkum, Sericit, Kaolin sowie SiO₂-, Glas-, Graphit-, Al₂O₃-Plättchen und deren Mischungen, ausgewählt wird. Bevorzugte Substrate sind hierbei Glimmer, SiO₂-, Glas-, oder Al₂O₃-Plättchen.

Auf dieses niedrig brechende plättchenförmige Substrat werden weitere, bevorzugt hochbrechende, Schichten abgeschieden. Derartige Schichten werden vorzugsweise aus der Gruppe, bestehend aus Metallchalkogeniden, insbesondere Metalloxiden, Metallhydroxiden, Metalloxidhydraten, Metallsuboxiden und Metallsulfiden, Metallfluoriden, , Metallnitriden, Metallcarbiden und deren Mischungen, ausgewählt.

Bevorzugt werden die Substrate der Perlglanzpigmente mit einem mehrschichtigen Schichtaufbau mit oder aus Metalloxid, Metallhydroxid, Metallsuboxid und/oder Metalloxidhydrat beschichtet, wobei die Reihenfolge der Schichten variabel ist. Die Metalloxide, Metallhydroxide, Metallsuboxide und/oder Metalloxidhydrate können auch nebeneinander in der selben Schicht vorliegen.

Bevorzugt werden dabei die Substrate der Perlglanzpigmente mit einer oder mehreren Metalloxidschichten aus der Gruppe, bestehend aus oder umfassend TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet. Besonders bevorzugt sind TiO₂ und/oder Fe₂O₃.

Bei einer weiteren Ausführungsform weist der mehrschichtige Schichtaufbau eine Schichtenfolge auf, bei dem wenigstens eine hochbrechende Schicht und wenigstens eine niedrig brechende Schicht in alternierender Weise auf einem Substrat angeordnet sind.

Bei der alternierenden Anordnung ist es auch möglich ein oder mehrere hochbrechende Schichten unmittelbar übereinander und nachfolgend ein oder mehrere niedrig brechende Schichten unmittelbar übereinander anzuordnen.

Wesentlich ist jedoch, daß in dem Schichtaufbau hoch und niedrig brechende Schichten vorkommen.

Bevorzugt ist, dass der mehrschichtige Schichtaufbau eine Schichtenfolge aufweist, bei dem wenigstens eine hoch brechende Schicht, wenigstens eine niedrig brechende Schicht und wenigstens eine hoch brechende Schicht auf einem Substrat nacheinander angeordnet sind.

Auch bei dieser Variante können ein oder mehrere niedrig bzw. hoch brechende Schichten jeweils unmittelbar übereinander angeordnet sein. Wesentlich ist jedoch, daß in dem Schichtaufbau von innen nach außen hoch und niedrig und wiederum hoch brechende Schichten angeordnet sind.

Vorzugsweise enthält oder besteht die wenigstens eine hochbrechende Schicht aus Metalloxid und/oder Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen. Die niedrig brechende Schicht enthält oder besteht vorzugsweise aus Metalloxid und/oder Metallhydroxid aus der Gruppe, bestehend aus SiO₂, Al₂O₃ und Mischungen davon.

Perlglanzpigmente, die hoch und niedrig brechende Schichten aufweisen, ergeben besonders intensive Interferenzfarben. Insbesondere Perlglanzpigmente mit hoch brechenden und einer niedrig brechenden und wiederum einer hoch brechenden Schicht sind besonders bevorzugt. Eine Schichtfolge mit oder aus TiO₂ / SiO₂ / TiO₂ und optional noch einer Schicht mit Fe₂O₃ ergeben intensive Goldtöne und sind besonders bevorzugt.
Perlglanzpigmente mit der vorstehenden Schichtenfolge werden von der Fa. Merck hergestellt und unter dem Handelsnamen Iriodin Stargold vertrieben.

Bei einer weiteren Ausführungsform bestehen die Perlglanzpigmente aus Glassplättchen als Substrate, welche beidseitig mit semitransparenten Metallschichten beschichtet sind.

Die Metalle der semitransparenten Metallschichten sind bevorzugt aus der Gruppe bestehend aus Silber, Aluminium, Chrom, Nickel, Gold, Platin, Palladium, Kupfer, Zink, deren Mischungen und deren Legierungen, ausgewählt. Die Dicken der semitransparenten Schichten liegen vorzugsweise in einem Bereich von ca. 2 bis ca. 30 nm, weiter bevorzugt von ca. 5 bis ca. 20 nm.

Die vorstehend genannten Perlglanzpigmente können selbstverständlich noch mit weiteren Schutzschichten beschichtet sein. Hierdurch kann die Stabilität der Perlglanzpigmente gegenüber Wettereinflüssen weiter verbessert werden. Hier ist insbesondere die photokatalytische Aktivität von Perlglanzpigmenten mit TiO₂-Schichten zu nennen, die durch geeignete Schutzschichten unterdrückt werden kann.

Gemäß einer bevorzugten Variante der vorliegenden Erfindung werden die mit einer oder mehreren Schichten mit oder aus Metallchalkogenid(en), insbesondere Metalloxid(en), Metallhydroxid(en), Metalloxidhydrat(en), Metallsuboxid(en) und Metallsulfid(en), Metallfluorid(en), Metallnitrid(en), Metallcarbid(en) oder deren Mischungen beschichteten Substrate der Perlglanzpigmente zusätzlich mit mindestens einer äußeren Schutzschicht mit oder aus Metalloxid und/oder Metallhydroxid und/oder Metalloxidhydrat von Metallen aus der Gruppe, bestehend aus Silicium, Aluminium, Cer, Mangan, Zirkonium und Mischungen davon, ausgewählt wird, umhüllend beschichtet sind, wobei die wenigstens eine organische Phosphor-haltige Verbindung gemäß der allgemeinen Formel (I) und/oder (II) auf die äußere umhüllende Schutzschicht aufgebracht ist.
Bei einer weiteren Ausführungsform bestehen die Perlglanzpigmente aus einem einzigen plättchenförmigen Material, wobei das Material aus der Gruppe, bestehend aus Bismuthoxychlorid, TiO₂ und Fe₂O₃, ausgewählt ist.

Beispielsweise können die von der Firma Merck KGaA, Darmstadt, Deutschland unter den Marken Iriodin^{®}, Florapearl^{®}, Solarflair^{®}, Lazerflair^{™}, Biflair^{®}, Minatec^{®}, Miraval^{®}, Xirallic^{®} oder Colorstream^{®}, die von der Firma Engelhard, USA unter den Markennamen Mearlin^{®} oder Exterior Mearlin^{®} sowie die von der Firma Eckart unter den Marken Prestige^{®} oder Phoenix^{®} vertriebenen Perlglanzpigmente verwendet werden.

Bei weiteren Ausführungsformen können die vorstehend genannten Perlglanzpigmente auch mit Farbpigmenten beschichtet sein. Hierdurch sind intensivere Farben und insbesondere two-tone Perlglanzpigmente zugänglich. Beispiele hierfür sind die unter dem Handelsnamen Dynacolor von Engelhard vertriebenen Perlglanzpigmente.
Die wenigstens eine organische Phosphor-haltige Verbindung weist die allgemeine Formel (I)

R¹R²P(O)(OR³) (I)

und/oder der allgemeinen Formel (II)

R¹P(O)(OR³)(OR⁴) (II)

auf, wobei R¹ und R² unabhängig voneinander Wasserstoff oder ein organischer Rest mit 1 bis 30 C-Atomen sind, mit der Maßgabe, daß R¹ und R² nicht gleichzeitig Wasserstoff sind, und R³ und R⁴ unabhängig voneinander H oder Alkyl mit 1 -10 C-Atomen sind.

Bevorzugt ist hierbei, daß R³ und R⁴ unabhängig voneinander H, Methyl oder Ethyl sind. Gemäß einer bevorzugten Weiterbildung sind R³ und R⁴ gleich.

Die organischen Reste R¹ und R² können unabhängig von einander sein (C₁ - C₃₀)-Alkyl-,(C₂ - C₃₀)-Alkenyl-, (C₂ - C₃₀)-Alkinyl-; (C₆ - C₃₀)-Aryl-, (C₇ - C₃₀)-Alkylaryl-, (C₇ - C₃₀)-Arylalkyl, (C₈ - C₃₀)-Alkenylaryl-, (C₈ - C₃₀)-Arylalkinyl-, (C₈ - C₃₀)-Alkinylaryl-; (C₅ - C₃₀)-Cycloalkyl-, (C₅ - C₃₀)-Alkylcycloalkyl-, (C₅ - C₃₀)-Cycloalkylalkylgruppen. Die Reste R¹ und R² können unabhängig voneinander verzweigt oder unverzweigt sein. Bevorzugt handelt es sich um Alkylreste mit 4 bis 20 und besonders bevorzugt um Alkylreste mit 6 bis 18 C-Atome, die vorzugsweise jeweils unverzweigt sind. Gemäß einer bevorzugten Variante sind R¹ und R² gleich. In den Kohlenstoffketten können Heteroatome, vorzugsweise O, S und/oder N, enthalten sein.

Bei einer besonders bevorzugten Ausführungsform sind R³ und R⁴ Wasserstoff, sowie R¹ ein Alkylrest mit 6 bis 18 C-Atomen, der vorzugsweise unverzweigt ist. Beispiele hierfür sind die kommerziell leicht erhältlichen Oktanphosphonsäure (z.B. Fa. Rhodia) oder Dodecylphosphonsäure.

Die Verwendung von Phosphonsäuren als Stabilisierungsmittel ist bei Metallpigmenten seit längerem bekannt. Insbesondere bei Aluminiumpigmenten können organische Phosphonsäuren und/oder deren Ester als Korrosionsschutzmittel zur Verhinderung der Gasung (Wasserstoffentwicklung) beim Kontakt mit Wasser dienen. Die Phosphonsäuregruppe ist als besonders gute Ankergruppe auf Aluminiumoberflächen, die stets von einer natürlichen Oxidschicht belegt sind, bekannt.

Es hat sich nun überraschend herausgestellt, dass auch die Oberflächen von Perlglanzpigmenten, die i.d.R. aus gänzlich anderen Materialien bestehen, gut von organischen phosphinigen Säuren und/oder organischen Phosphonsäuren und/oder deren Estern belegt werden. Dies war nicht zu erwarten, insbesondere da die organischen phosphingen Säuren und/oder organischen Phosphonsäuren und/oder deren Ester offenbar auf unterschiedlichsten Oxiden adsorbieren müssen. Perlglanzpigmente weisen, bedingt durch ihren Herstellprozeß, der stets Kalzinierungsschritte einschließt, häufig mit Oberflächen auf, die arm an OH-Gruppen sind. Gerade an OH-Gruppen jedoch binden organische phosphinige und/oder organische Phosphonsäuren und/oder deren Ester bevorzugt an. Insofern war es äußerst überraschend, dass organische phosphinige und/oder organische Phosphonsäuren auf derart unterschiedlichen Perlglanzpigmenten adsorbiert werden und ihnen mithin vorteilhafte Eigenschaften verleihen.
Die der Erfindung zugrundeliegende Aufgabe wird des weiteren auch durch Bereitstellen eines Verfahren zur Herstellung eines Perlglanzpigmentes nach einem der Ansprüche 1 bis 15, gelöst, wobei das Verfahren folgende Schritte umfaßt:
(a) Vermischen von Perlglanzpigmenten mit Phosphor-haltigen Verbindung mit der allgemeinen Formel (I)

   R¹R²P(O)(OR³) (I)

   und/oder der allgemeinen Formel (II)

   R¹P(O)(OR³)(OR⁴) (II)

   wobei
   R¹ und R² unabhängig voneinander Wasserstoff oder ein organischer Rest mit 1 bis 30 C-Atomen sind, mit der Maßgabe, daß R¹ und R² nicht gleichzeitig Wasserstoff sind,
   R³ und R⁴ unabhängig voneinander H oder Alkyl mit 1 - 10 C-Atomen sind, in einer Flüssigphase,
(b) Abtrennen der Perlglanzpigmente von der Flüssigphase und ggfs. überschüssiger organischer Phosphor-haltiger Verbindung,
(c) optional Trocknen der oberflächenmodifizierten Perlglanzpigmente.

Während des Vermischens von Perlglanzpigment und Phosphor-haltiger Verbindung mit der allgemeinen Formel (I) und/oder (II) bindet die Phosphor-haltige Verbindung an die Oberfläche des Perlglanzpigmentes. Die Bindung der Phosphor-haltigen Verbindung an die Pigmentoberfläche kann durch chemische Bindung und/oder durch Adhäsion erfolgen.

Hierbei können die Perlglanzpigmente zunächst in einem Lösemittel angepastet oder dispergiert und anschließend die organische phosphinige Säure und/oder die organische Phosphonsäure und/oder deren Ester hinzugegeben werden. Es können jedoch auch zunächst die organische phosphinige Säure und/oder die organische Phosphonsäure und/oder deren Ester in einem Lösemittel gelöst oder dispergiert werden und anschließend die Perlglanzpigmente hinzugegeben und miteinander verrührt werden, oder es wird eine Lösung der organischen phosphinigen Säure und/oder der organischen Phosphonsäure und/oder deren Ester einer Paste aus Perlglanzpigment und Lösemittel zugeführt. Die Kontaktzeit von Perlglanzpigment und organischen Phosphonsäuren oder deren Ester sollte bevorzugt 5 Minuten bis 5 Stunden und besonders bevorzugt 15 Minuten bis 2 Stunden betragen. Das Lösemittel kann auf eine Temperatur aus einem Bereich von 30°C bis zu seinem Siedepunkt erwärmt werden. Dies kann insbesondere die Lösbarkeit der organischen phosphinigen Säure und/oder organischen Phosphonsäuren und/oder deren Ester verbessern.
Die Trennung von beschichteten Perlglanzpigmenten und Lösemittel erfolgt mittels gängiger Methoden wie Filtration, Abnutschen, Dekantierung, etc.
Die Trocknung erfolgt bevorzugt bei erhöhten Temperaturen aus einem Bereich von ca. 40 bis 100°C und optional unter reduziertem Druck.

Das Lösemittel, in dem die organische phosphinige Säure(n) und/oder organische Phosphonsäure(n) und/oder ihre Derivate oder Salze oder Phosphorsäureester löslich oder dispergierbar ist, wird bevorzugt aus der Gruppe Ethylacetat, Isopropylacetat, n-Propylacetat, Ethanol, Isopropanol, Aceton und deren Mischungen ausgewählt. Selbstverständlich können auch andere Lösemittel auf Kohlenwasserstoff-Basis ausgewählt werden.

Bei einer weiteren Ausführungsform können Perlglanzpigment und organische Phosphonsäure auch ohne Gegenwart von Lösemittel miteinander vermischt werden. Eine derartige Verfahrensweise kann in Knetern, Mischern oder ähnlichen Geräten durchgeführt werden..

Die der Erfindung zugrundeliegende Aufgabe wird auch durch Bereitstellung einer Pulverlackzusammensetzung, die die erfindungsgemäßen Perlglanzpigmente enthält, gelöst.

Die erfindungsgemäßen Perlglanzpigmente eignen sich hervorragend zur Verwendung in Pulvedacken. Es hat sich jedoch gezeigt, daß die erfindungsgemäßen Perlglanzpigmente auch in weiteren Anwendungen verwendet werden können. Die erfindungsgemäßen Perglanzpigmente können auch in Coatings, Lacken, Druckfarben, Kunststoffen oder Bronzierungen vorteilhaft verwendet werden.

Im Bereich von Coatings können sie in Automobillacken ,wenn es sich um mit Schutzschichten versehene Perlglanzpigmente handelt, Coil-Coatings und insbesondere in Pulverlacken verwendet werden.

Bevorzugt werden die erfindungsgemäßen Perlglanzpigmente in Pulverlacken und in Bronzierungen eingesetzt. Ausserdem finden derartige Produkte Verwendung bei der Herstellung von Trockenpräparaten in der Form von Kugeln, Pellets, Briketts, Tabletten, Würstchen, Granulat, usw.. Die Trockenpräparate weisen dabei einen Feuchtigkeitsgehalt von vorzugsweise weniger als 10 Gew.-%, weiter bevorzugt von weniger als 6 Gew.-% und noch weiter bevorzugt von weniger als 4 Gew.-%, jeweils bezogen das Gesamtgewicht des Perlglanzpigmentes, auf. Als sehr geeignet hat sich ein Feuchtigkeitsgehalt von 1 bis 3 Gew.-% erwiesen.

Aus den vorstehend beschriebenen erfindungsgemäßen mit organischen phosphinigen und/oder organischen Phosphonsäure(n) und/oder deren Estern beschichteten Perlglanzpigmenten kann nach dem Fachmann bekannten Verfahren ein mit Perlglanzpigmenten pigmentierter Pulvedack hergestellt werden. Die Herstellung erfolgt beispielsweise durch "dry-blending" oder "bonding". Es werden vorzugsweise 0,1 bis 12 Gew.-%, bevorzugt 1 bis 5 Gew.-% und besonders bevorzugt 2 bis 4 Gew.-% des erfindungsgemäßen Perlglanzpigmentes sowie entsprechend 88 bis 99,9 Gew.-%, vorzugsweise 95 bis 99 Gew.-% bzw. 96 bis 98 Gew.-% Pulverlackbindemittel in einem Rührgefäß unter geeigneten, dem Fachmann geläufigen Bedingungen, miteinander vermischt. Die Summe der Gewichtsanteile von erfindungsgemäßem Perlglanzpigment und Pulverlackbindemittel ergibt jeweils 100 Gew.-%, sofern nicht weitere Additive hinzugegeben werden. Dabei kann bis zur Erweichungstemperatur des Pulverlackbindemittels vorzugsweise in einem Bereich von ca. 50 - 90 °C erwärmt werden ("Bonding"). Die Angaben Gew.-% beziehen sich dabei jeweils auf das Gesamtgewicht des Pulverlacks,

Mit den erfindungsgemäßen beschichteten Perlglanzpigmenten werden Pulverlacke erhalten, in denen die Perlglanzpigmente nach Aufbringung oberflächennah lokalisiert sind, d.h. einen leafing-Effekt zeigen. Hiermit werden Pulverlacke erhalten die einen brillanten Perlglanzeffekt bei lackierten Gegenständen bei verbesserter Helligkeit und verbessertem Flop aufweisen. Bei Verwendung farbiger Perlglanzpigmente erhält man ein höheres Chroma. Die so erhaltenen Pulverlacke lassen sich sehr gut verarbeiten und haften vor dem Einbrennen ausgezeichnet auf dem Untergrund. In der Regel können aufgrund der erhöhten Brillanz der Pulverlacke weniger Perlglanzpigment als gewöhnlich verwendet werden, was ein großer wirtschaftlicher Vorteil ist.

Als Pulverlack-Bindemittel können beispielsweise TGIC-Polyester, non-TGIC-Polyester, Polyurethane, Polyacrylate, Epoxidharze oder Epoxypolyester eingesetzt werden.

Die vorliegende Erfindung wird anhand einiger Ausführungsbeispiele erläutert, die den Umfang der Erfindung jedoch nicht beschränken.

### Beispiel 1:

100 g wetterstabiles Perlglanzpigment PHOENIX XT 2001 (Fa. ECKART, Chromhydroxid-belegt) werden in 150 g Ethanol dispergiert. Es werden 1,5 g Oktanphosphonsäure gelöst in 20 g Ethanol zugegeben und 30 min durch Rühren homogen miteinander vermischt. Nach 1 Stunde Rühren bei Raumtemperatur wird das Pigment abfiltriert und im Vakuumtrockenschrank bei 40°C 6 bis 8 Stunden getrocknet.

### Beispiel 2:

Wie Beispiel 1, jedoch werden 2,5 g Oktanphosphonsäure verwendet.

### Vergleichsbeispiel 3:

PHOENIX XT 2001 ohne weitere organische Nachbehandlung

### Vergleichsbeispiel 4:

Iriodin 9119 WR: Wetterstabilisiertes Perlglanzpigment (Chromhydroxid-belegt) ohne weitere organische Nachbehandlung

### Vergleichsbeispiel 5:

Iriodin 9119 PC S WR: Wetterstabilisiertes Perlglanzpigment mit Stearinsäurebelegung

### Vergleichsbeispiel 6 (in Anlehnung an EP 0 492 223 B1) :

100 g Perlglanzpigment PHOENIX XT 2001 werden in 250 g Ethanol techn. dispergiert und auf 60 °C erwärmt. Es werden zuerst 1,5 g Ethylendiamin und 5 min später 1,5 g Dynasylan 9116 gelöst in 20 g Ethanol zugegeben. Nach 2 Stunden Rühren bei 60°C wird das Pigment abfiltriert, gewaschen und im Vakuumtrockenschrank bei 40°C 6 bis 8 Stunden getrocknet.

### Vergleichsbeispiel 7 (in Anlehnung an EP 0 492 223 B1):

Wie das Vergleichsbeispiel 6, jedoch verwendet man 2,5 g Dynasylan 9116 und gibt mit der Base noch zusätzlich 10 g Wasser hinzu.

Die Perlglanzpigmente gemäß den erfindungsgemäßen Beispielen 1 und 2 und die Perglanzpigmente gemäß den der Vergleichsbeispiele 3 bis 7 wurden zu je 3 Gew.-%, bezogen auf das Gewicht des gesamten Pulverlacks, in einen kommerziell erhältlichen TGIC-freien Polyester-Pulverlack mit dem Farbton RAL 9005 (Fa. Tiger, Wels, Österreich) mittels des Bonding-Verfahrens eingearbeitet.

Die Pulverlack wurden mittels des Corona-Verfahrens bei einer Spannung von 70 - 80 kV mit der ITWGema PG1 auf Stahl-Prüfbleche appliziert und anschließend bei 200 °C für 10 min eingebrannt.

Die Helligkeit und der Flop von Pulverlackierungen lassen sich nicht mit den bei Naßlackierungen gewohnten farbmetrischen Messungen reproduzierbar charakterisieren, da bei Pulverlacken die Reproduzierbarkeit nicht in diesem Maße gegeben ist. Daher wurde die Helligkeit und der Flop der Prüfbleche visuell beurteilt. Hierbei wurde in Anlehnung an die DIN 53230 die Prüfbleche mittels eines Notensystems charakterisiert. Es bedeuten:
Note 0: sehr gut
Note 1: gut
Note 2: befriedigend
Note 3. akzeptabel
Note 4: nicht mehr akzeptabel
Note 5: völlig unakzeptabel

Ferner wurde die Helligkeit mittels eines Farbmeßgerätes (Minolta CM-508E) vermessen. Hierbei wird die diffuse Reflektion erfasst, die den visuellen Eindruck der Helligkeit realitätsnah und reproduzierbar widerspiegelt.

Ferner wurden analytisch der C-Gehalt der Proben mittels Elementanalyse ermittelt und mit dem theoretisch möglichen Wert verglichen. Unter der Annahme, das der gemessene C-Gehalt ausschließlich von der organischen Oberflächenmodifizierung stammt, kann auf diese Weise anhand der Mengen und Molekulargewichte der eingesetzten Modifizierungsmittel sowie des theoretisch vorhandenen C-Gehaltes auf den tatsächlichen Gehalt derselbigen zurückgerechnet werden.

Die C-Gehalte, die berechnete Menge an Oberflächenmodifizierungsmittel und die Daten der farbmetrischen und visuellen Beurteilung von lackierten Prüfblechen sind in Tab. 1 zusammengefasst.

**Tab.1: Beispiele mit C-Gehalten und optischen Eigenschaften von mit nach Bonding-Verfahren hergestelltem Pulverlack beschichteten Prüfblechen**

| **Proben** | **C-Gehaltₜₕₑₒ [Gew.-%]** | **C-Gehaltₚᵣₐₖₜ [Gew.-%]** | **Gehalt Oberflächen-modifizierung [Gew.-%]** | **L*-Wert** | **Visuelle Beurteilung** | |
|---|---|---|---|---|---|---|
| | | | | | Helligkeit | Flop |
| Beispiel 1 | 0,75 | 0,67 | 1,3 | 55,6 | 1 | 1 |
| Beispiel 2 | 1,25 | 0,85 | 1,8 | 54,0 | 2 | 1 |
| Vergl.- Beispiel. 3 | | | -- | 49,7 | 2 | 3 |
| Vergl.- Beispiel 4 | | | -- | 48,8 | 3 | 3 |
| Vergl.- Beispiel 5 | | | -- | 49,2 | 3 | 2 |
| Vergl.- Beispiel 6 | 0,83 | 0,63 | 1,1 | 50,9 | 3 | 2 |
| Vergl.- Beispiel 7 | 1,38 | 1,04 | 1,9 | 52,3 | 2 | 1 |

Die ermittelten Helligkeitswerte von lackierten Prüfblechen sind bei Verwendung der erfindungsgemäß beschichteten Perlglanzpigmente im Pulverlack die höchsten. Dies stimmt mit dem visuellen Eindruck einer erhöhten Helligkeit überein. In der Kombination von visuell beurteilter Helligkeit und Flop schneiden die erfindungsgemäßen Beispiele ebenfalls am besten ab.

Am schlechtesten sind in den Probelackierungen auf den Prüfblechen die kommerziell erhältlichen Perlglanzpigmente gemäß den Vergleichsbeispielen 4 und 5. Eine Stearinsäurebelegung scheint demnach keine wesentlichen Vorteile für Perlglanzpigmente im Pulverlack gegenüber einem unbehandelten Perlglanzpigment zu bringen.

Eine Behandlung mit von Perlglanzpigmenten mit Alkylsilanen (siehe Vergleichsbeispiele 6 und 7) verbessert das optische Erscheinungsbild im Hinblick auf Helligkeit und Flop gegenüber einem unbehandelten Perlglanzpigment (siehe Vergleichsbeispiel 3) bei den Probelackierungen auf Prüfblechen deutlich. Jedoch sind Helligkeit und Flopverhalten der Perlglanzpigmente gemäß den erfindungsgemäßen Beispiele noch deutlich intensiver und bewirken somit gegenüber den Vergleichsbeispielen signifikant vorteilhaftes Erscheinungsbild.

### Beispiel 8:

Wie Beispiel 1, jedoch wird als Perlglanzpigment Exterior Mearlin Mayan Gold 233 X (Fa. Engelhard) eingesetzt und mit 1,0 Gew.-% Oktanphosphonsäure beschichtet.

### Vergleichsbeispiel 9:

Das Perlglanzpigment Exterior Mearlin Mayan Gold 233 X ohne weitere Nachbehandlung.

### Beispiel 10:

Wie Beispiel 1, jedoch wird als Perlglanzpigment Exterior Mearlin Super Blue 639Z (Fa. Engelhard) eingesetzt und mit 1,0 Gew.-% Oktanphosphonsäure beschichtet

### Vergleichsbeispiel 11:

Das Perlglanzpigment Exterior Mearlin Super Red 439 Z (Fa. Engelhard) eingesetzt.

### Beispiel 12:

Wie Beispiel 1, jedoch wird als Perlglanzpigment Exterior Mearlin Super Red 439 Z (Fa. Engelhard) eingesetzt und mit 1,0 Gew.-% Oktanphosphonsäure beschichtet.

### Vergleichsbeispiel 13:

Wie Beispiel 1, jedoch wird als Perlglanzpigment Exterior Mearlin Super Red 439 Z (Fa. Engelhard) eingesetzt.

Die gemäß den erfindungsgemäßen Beispielen 8, 10 und 12 hergestellten Perlglanzpigmente und die gemäß den Vergleichsbeispielen 9, 11 und 13 hergestellten Perlglanzpigmente wurden jeweils, wie oben beschrieben, im Pulverlack eingesetzt und auf Prüfbleche appliziert. Anschließend wurde mittels des Farbmessgerätes die Helligkeit und das Chroma bei den Probelackierungen bestimmt. In Tab. 2 sind die Ergebnisse dargestellt.

Tab. 2: Helligkeit und Chroma verschiedener farbiger unter Verwendung von erfindungsgemäßen Perlglanzpigmenten und nicht-erfindungsgemäßen Perlglanzpigmenten auf Prüfblechen hergestellten Pulverlackbeschichtungen.

| **Probe** | **Helligkeit L*** | **Chroma C*** |
|---|---|---|
| **Beispiel 8** | 32,2 | 6,5 |
| **Vergleichs**-**beispiel** 9 | 27,5 | 0,4 |
| **Beispiel 10** | 30,0 | 6,8 |
| **Vergleichs**-**beispiel 11** | 27,5 | 2,7 |
| **Beispiel 12** | 27,9 | 5,0 |
| **Vergleichs**-**beispiel 13** | 27,4 | 2,0 |

Ein Vergleich zeigt das die unter Verwendung der erfindungsgemäß beschichteten Perlglanzpigmente hergestellten Probelackierungen auf Prüfblechen ein deutlich höheres Chroma und höhere Helligkeiten aufweisen als die unter Verwendung der nicht erfindungsgemäßen Perlglanzpigmente. Das höhere Chroma und die höhere Helligkeit ist auf das stärkere Aufschwimmen der erfindungsgemäßen Perlglanzpigmente in dem durch Pulverlackierung erzeugten Lackfilm, d.h. einer Anordnung der erfindungsgemäßen Perlglanzpigmente an oder in der Nähe der Oberfläche (leafing-Effekt) des Lackfilms zurückzuführen. Durch die Anordnung der Perlglanzpigmente an oder in der Nähe der Oberfläche des Lackfilms wird eine bessere Orientierung parallel zur Oberfläche bewirkt.

## Patentansprüche

1. Oberflächenmodifizierte Perlglanzpigmente,
**dadurch gekennzeichnet,**
**dass** die Perlglanzpigmente an der Oberfläche mit wenigstens einer organischen Phosphor-haltigen Verbindung mit der allgemeinen Formel (1)
R¹R²P(O)(OR³) (I)
und/oder der allgemeinen Formel (II)
R¹P(O)(OR³)(OR⁴) (II)
versehen sind,
wobei
R¹ und R² unabhängig voneinander Wasserstoff oder ein organischer Rest mit 1 bis 30 C-Atomen sind, mit der Maßgabe, daß R¹ und R² nicht gleichzeitig Wasserstoff sind,
R³ und R⁴ unabhängig voneinander H oder Alkyl mit 1 - 10 C-Atomen sind.

2. Oberflächenmodifizierte Perlglanzpigmente nach Anspruch 1,
**dadurch gekennzeichnet,**
**dass** die Perlglanzpigmente 0,05 bis 10 Gew.-% der wenigstens einen organische Phosphor-haltigen Verbindung gemäß der allgemeinen Formel (I) und/oder (II) aufweisen, wobei sich die Angabe Gew.-% auf das Gesamtgewicht des Perlglanzpigmentes bezieht.

3. Oberflächenmodifizierte Perlglanzpigmente nach einem der vorstehenden Ansprüche,
**dadurch gekennzeichnet,**
**dass** die Perlglanzpigmente eine Pigmentgröße von 1 bis 400 µm aufweisen.

4. Oberflächenmodifizierte Perlglanzpigmente nach einem der vorstehenden Ansprüche,
**dadurch gekennzeichnet,**
**dass** die Perlglanzpigmente ein Substrat aufweisen, welches aus der Gruppe, bestehend aus Glimmer, Talkum, Sericit, Kaolin sowie SiO₂-, Glas-, Graphit-, Al₂O₃-Plättchen und deren Mischungen, ausgewählt wird.

5. Oberflächenmodifizierte Perlglanzpigmente nach Anspruch 4,
**dadurch gekennzeichnet,**
**dass** die Substrate der Perlglanzpigmente mit einer oder mehreren Schichten aus der Gruppe, bestehend aus Metallchalkogeniden, insbesondere Metalloxiden, Metallhydroxiden, Metalloxidhydraten, Metallsuboxiden und Metallsulfiden, Metallfluoriden, Metallnitriden, Metallcarbiden und deren Mischungen, beschichtet sind.

6. Oberflächenmodifizierte Perlglanzpigmente nach Anspruch 4 oder 5,
**dadurch gekennzeichnet,**
**dass** die Substrate der Perlglanzpigmente mit einem mehrschichtigen Schichtaufbau mit oder aus Metalloxid, Metallhydroxid, Metallsuboxid,und/oder Metalloxidhydrat- beschichtet sind, wobei die Reihenfolge der Schichten variabel ist.

7. Oberflächenmodifizierte Perlglanzpigmente nach Anspruch 5 oder 6,
**dadurch gekennzeichnet,**
**dass** die Substrate der Perlglanzpigmente mit einer oder mehreren Metalloxidschichten aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und deren Mischungen, beschichtet sind.

8. Oberflächenmodifizierte Perlglanzpigmente nach Anspruch 6,
**dadurch gekennzeichnet,**
**dass** der mehrschichtige Schichtaufbau eine Schichtenfolge aufweist, bei dem wenigstens eine hochbrechende Schicht und wenigstens eine niedrig brechende Schicht in alternierender Weise auf einem Substrat angeordnet sind..

9. Oberflächenmodifizierte Perlglanzpigmente nach Anspruch 6,
**dadurch gekennzeichnet,**
**dass** der mehrschichtige Schichtaufbau eine Schichtenfolge aufweist, bei dem wenigstens eine hochbrechende Schicht, wenigstens eine niedrig brechende Schicht und wenigstens eine hochbrechende Schicht auf einem Substrat nacheinander angeordnet sind.

10. Oberflächenmodifizierte Perlglanzpigmente nach Anspruch 8 oder 9,
**dadurch gekennzeichnet,**
**dass** die wenigstens eine hochbrechende Schicht wenigstens ein Metalloxid und/oderwenigstens ein Metallhydroxid aus der Gruppe, bestehend aus TiO₂, Fe₂O₃, Fe₃O₄, TiFe₂O₅, ZnO, SnO₂, CoO, Co₃O₄, ZrO₂, Cr₂O₃ VO₂, V₂O₃, (Sn,Sb)O₂ und Mischungen davon, aufweist oder daraus besteht und die niedrig brechende Schicht wenigstens ein Metalloxid und/oder wenigstens ein Metallhydroxid, vorzugsweise aus der Gruppe, bestehend aus SiO₂, Al₂O₃ und Mischungen davon, aufweist oder daraus besteht.

11. Oberflächenmodifizierte Perlglanzpigmente nach Anspruch 4,
**dadurch gekennzeichnet,**
**dass** die Perlglanzpigmente beidseitig mit semitransparenten Metallschichten beschichtete Glasplättchen sind.

12. Oberflächenmodifizierte Perlglanzpigmente nach Anspruch 11,
**dadurch gekennzeichnet,**
**dass** die Metalle der semitransparenten Metallschichten aus der Gruppe, bestehend aus Silber, Aluminium, Chrom, Nickel, Gold, Platin, Palladium, Kupfer, Zink, deren Mischungen und deren Legierungen, ausgewählt sind.

13. Oberflächenmodifizierte Perlglanzpigmente nach einem der Ansprüche 5 bis 12,
**dadurch gekennzeichnet,**
**dass** die mit einer oder mehreren Schichten mit oder aus Metallchalkogenid(en), insbesondere Metalloxid(en), Metallhydroxid(en), Metalloxidhydrat(en), Metallsuboxid(en) und Metallsulfid(en), Metallfluorid(en), Metallnitrid(en), Metallcarbid(en) oder deren Mischungen beschichteten Substrate der Perlglanzpigmente zusätzlich mit mindestens einer äußeren Schutzschicht mit oder aus Metalloxid und/oder Metallhydroxid und/oder Metalloxidhydrat von Metallen aus der Gruppe, bestehend aus Silicium, Aluminium, Cer, Mangan, Zirkonium und Mischungen davon, ausgewählt wird, umhüllend beschichtet sind, wobei die wenigstens eine organische Phosphor-haltige Verbindung gemäß der allgemeinen Formel (I) und/oder (II) auf die äußere umhüllende Schutzschicht aufgebracht ist.

14. Oberflächenmodifizierte Perlglanzpigmente nach einem der Ansprüche 1 bis 3,
**dadurch gekennzeichnet,**
**dass** die Perlglanzpigmente aus einem einzigen plättchenförmigen Material bestehen, wobei das Material aus der Gruppe, bestehend aus Bismuthoxychlorid, TiO₂, Fe₂O₃ und Mischungen davon, ausgewählt ist.

15. Oberflächenmodifizierte Perlglanzpigmente nach einem der vorstehenden Ansprüche,
**dadurch gekennzeichnet,**
**dass** die Perlglanzpigmente eine oder mehrere Schichten mit Farbpigmenten
aufweisen.

16. Verfahren zur Herstellung eines Perlglanzpigmentes nach einem der Ansprüche 1 bis 15,
**dadurch gekennzeichnet,**
**dass** das Verfahren folgende Schritte umfaßt:
(a) Vermischen von Perlglanzpigmenten mit wenigstens einer organischen Phosphor-haltigen Verbindung mit der allgemeinen Formel (I)
R¹R²P(O)(OR³) (I)
und/oder der allgemeinen Formel (II)
R¹P(O)(OR³)(OR⁴) (II)
wobei
R¹ und R² unabhängig voneinander Wasserstoff oder ein organischer Rest mit 1 bis 30 C-Atomen sind, mit der Maßgabe, daß R¹ und R² nicht gleichzeitig Wasserstoff sind,
R³ und R⁴ unabhängig voneinander H oder Alkyl mit 1 - 10 C-Atomen sind, in einer Flüssigphase,
(b) Abtrennen der Perlglanzpigmente von der Flüssigphase und ggfs. überschüssiger organischer Phosphor-haltiger Verbindung,
(c) optional Trocknen der oberflächenmodifizierten Perlglanzpigmente.

17. Verfahren nach Anspruch 16,
**dadurch gekennzeichnet,**
**dass** die Trennung von beschichtetem Perlglanzpigment und Lösemittel mittels Filtration, Abnutschen, Dekantierung erfolgt.

18. Verfahren nach Anspruch 16 oder 17,
**dadurch gekennzeichnet,**
**dass** die Trocknung bevorzugt bei erhöhten Temperaturen von ca. 40 bis 100°C und gegebenenfalls unter reduziertem Druck erfolgt.

19. Verfahren nach einem der Ansprüche 16 bis 18,
**dadurch gekennzeichnet,**
**dass** das Lösungsmittel ein solches ist, in dem die Phosphonsäure/n oder ihre Ester löslich oder dispergierbar sind und welches wird bevorzugt aus der Gruppe, die aus Ethylacetat, Isopropylacetat, n-Propylacetat, Ethanol, Isopropanol, Aceton und Mischungen davon besteht, ausgewählt wird.

20. Verwendung eines beschichteten Perlglanzpigmentes nach einem der Ansprüche 1 bis 15 in Coatings, Lacken, Druckfarben, Kunststoffen, Pulverlacken oder Bronzierungen.

21. Verwendung eines beschichteten Perlglanzpigmentes nach einem der Ansprüche 1 bis 15 in Pigmentpräparationen und Trockenpräparaten, wie Kugeln, Pellets, Briketts, Tabletten oder Würstchen.

22. Pulverlackzusammensetzung,
**dadurch gekennzeichnet,**
**dass** der Pulverlack oberflächenmodifizierte Perlglanzpigmente nach einem der Ansprüche 1 bis 15 enthält.

## Claims

1. Surface-modified pearlescent pigment, **characterized in that** the pearlescent pigment is provided on the surface with at least one organic phosphorus compound of the general formula (I)
R¹R²P(O) (OR³) (I)
and/or of the general formula (II)
R¹P(O) (OR³) (OR⁴) (II)
where
R¹ and R² independently of one another are hydrogen or an organic radical having 1 to 30 carbon atoms, with the proviso that R¹ and R² are not simultaneously hydrogen,
R³ and R⁴ independently of one another are H or alkyl having 1-10 carbon atoms.

2. Surface-modified pearlescent pigment according to Claim 1, **characterized in that** the pearlescent pigment contains 0.05% to 10% by weight of the at least one organic phosphorus compound of the general formula (I) and/or (II), the percent by weight figure being based on the total weight of the pearlescent pigment.

3. Surface-modified pearlescent pigment according to either of the preceding claims, **characterized in that** the pearlescent pigment has a pigment size of 1 to 400 µm.

4. Surface-modified pearlescent pigment according to any one of the preceding claims, **characterized in that** the pearlescent pigment has a substrate selected from the group consisting of mica, talc, sericite, kaolin, and SiO₂, glass, graphite, and Al₂O₃ flakes, and mixtures thereof.

5. Surface-modified pearlescent pigment according to Claim 4, **characterized in that** the substrates of the pearlescent pigment have been coated with one or more layers from the group consisting of metal chalcogenides, especially metal oxides, metal hydroxides, metal oxide hydrates, metal suboxides, and metal sulfides, metal fluorides, metal nitrides, metal carbides, and mixtures thereof.

6. Surface-modified pearlescent pigment according to Claim 4 or 5, **characterized in that** the substrates of the pearlescent pigment have been coated with a multilayer system comprising or consisting of metal oxide, metal hydroxide, metal suboxide and/or metal oxide hydrate, the sequence of the layers being variable.

7. Surface-modified pearlescent pigment according to Claim 5 or 6, **characterized in that** the substrates of the pearlescent pigment have been coated with one or more metal oxide layers from the group consisting of TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂, and mixtures thereof.

8. Surface-modified pearlescent pigment according to Claim 6, **characterized in that** the multilayer system features a layer sequence in which at least one layer of high refractive index and at least one layer of low refractive index are disposed alternatingly on a substrate.

9. Surface-modified pearlescent pigment according to Claim 6, **characterized in that** the multilayer system features a layer sequence in which at least one layer of high refractive index, at least one layer of low refractive index, and at least one layer of high refractive index are disposed in succession on a substrate.

10. Surface-modified pearlescent pigment according to Claim 8 or 9, **characterized in that** the at least one layer of high refractive index comprises or consists of at least one metal oxide and/or at least one metal hydroxide from the group consisting of TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂, and mixtures thereof and the layer of low refractive index comprises or consists of at least one metal oxide and/or at least one metal hydroxide, preferably from the group consisting of SiO₂, Al₂O₃, and mixtures thereof.

11. Surface-modified pearlescent pigment according to Claim 4, **characterized in that** the pearlescent pigment comprises glass flakes coated on both sides with semitransparent metal layers.

12. Surface-modified pearlescent pigment according to Claim 11, **characterized in that** the metals of the semitransparent metal layers are selected from the group consisting of silver, aluminum, chromium, nickel, gold, platinum, palladium, copper, zinc, and mixtures and alloys thereof.

13. Surface-modified pearlescent pigment according to any one of Claims 5 to 12, **characterized in that** the substrates of the pearlescent pigment that are coated with one or more layers comprising or consisting of metal chalcogenide(s), particularly metal oxide(s), metal hydroxide(s), metal oxide hydrate(s), metal suboxide(s), and metal sulfide(s), metal fluoride(s), metal nitride(s), metal carbide(s) or mixtures thereof, are additionally coated envelopingly with at least one outer protective layer comprising or consisting of metal oxide and/or metal hydroxide and/or metal oxide hydrate of metals selected from the group consisting of silicon, aluminum, cerium, manganese, zirconium, and mixtures thereof, the at least one organic phosphorus compound of the general formula (I) and/or (II) being applied to the outer, enveloping protective layer.

14. Surface-modified pearlescent pigment according to any one of Claims 1 to 3, **characterized in that** the pearlescent pigment is composed of a single, platelet-shaped material, the material being selected from the group consisting of bismuth oxichloride, TiO₂, Fe₂O₃, and mixtures thereof.

15. Surface-modified pearlescent pigment according to any one of the preceding claims, **characterized in that** the pearlescent pigment has one or more layers comprising color pigments.

16. Process for preparing a pearlescent pigment according to any one of Claims 1 to 15, **characterized in that** the process comprises the following steps:
(a) mixing pearlescent pigment with at least one organic phosphorus compound of the general formula (I)
R¹R²P(O) (OR³) (I)
and/or of the general formula (II)
R¹P(O) (OR³) (OR⁴) (II)
where
R¹ and R² independently of one another are hydrogen or an organic radical having 1 to 30 carbon atoms, with the proviso that R¹ and R² are not simultaneously hydrogen,
R³ and R⁴ independently of one another are H or alkyl having 1-10 carbon atoms in a liquid phase,
(b) separating the pearlescent pigment from the liquid phase and, where appropriate, from excess organic phosphorus compound,
(c) optionally, drying the surface-modified pearlescent pigment.

17. Process according to Claim 16, **characterized in that** coated pearlescent pigment is separated from solvent by means of filtration, filtration with suction, and/or decanting.

18. Process according to Claim 16 or 17, **characterized in that** drying takes place preferably at elevated temperatures of about 40 to 100°C and where appropriate under reduced pressure.

19. Process according to any one of Claims 16 to 18, **characterized in that** the solvent is one in which the phosphonic acid(s) or esters thereof are soluble or dispersible and which is selected preferably from the group consisting of ethyl acetate, isopropyl acetate, n-propyl acetate, ethanol, isopropanol, acetone, and mixtures thereof.

20. Use of a coated pearlescent pigment according to any one of Claims 1 to 15 in coatings, varnishes, printing inks, plastics, powder coating materials or bronze-effect finishes.

21. Use of a coated pearlescent pigment according to any one of Claims 1 to 15 in pigment preparations or dry preparations, such as beads, pellets, briquettes, tablets or sausages.

22. Powder coating composition, **characterized in that** the powder coating material comprises surface-modified pearlescent pigment according to any one of Claims 1 to 15.

## Revendications

1. Pigments à lustre nacré modifiés en surface, **caractérisés en ce que** les pigments à lustre nacré sont pourvus sur la surface d'au moins un composé organique contenant du phosphore, de formule générale (I)
R¹R²P(O) (OR³) (I)
et/ou de formule générale (II)
R¹P (O) (OR³) (OR⁴) (II)
où
R¹ et R² sont indépendamment l'un de l'autre, un atome d'hydrogène ou un radical organique comportant 1 à 30 atomes de carbone, à condition que R¹ et R² ne soient pas en même temps un atome d'hydrogène,
R³ et R⁴ indépendamment l'un de l'autre, sont un atome d'hydrogène ou un groupe alkyle comportant 1 à 10 atomes de carbone.

2. Pigments à lustre nacré modifiés en surface, selon la revendication 1, **caractérisés en ce que** les pigments à lustre nacré présentent 0,05 à 10 % en poids d'au moins un composé organique contenant du phosphore selon la formule générale (I) et/ou (II), l'expression % en poids se rapportant au poids total du pigment à lustre nacré.

3. Pigments à lustre nacré modifiés en surface, selon l'une quelconque des revendications précédentes, **caractérisés en ce que** les pigments à lustre nacré présentent une taille de pigment de 1 à 400 µm.

4. Pigments à lustre nacré modifiés en surface, selon l'une quelconque des revendications précédentes, **caractérisés en ce que** les pigments à lustre nacré présentent un substrat qui est choisi dans le groupe constitué de mica, de talc, de séricite, de kaolin et de particules de SiO₂, de verre, de graphite, de Al₂O₃ et leurs mélanges.

5. Pigments à lustre nacré modifiés en surface, selon la revendication 4, **caractérisé en ce que** le substrat des pigments à lustre nacré sont revêtus d'une ou plusieurs couches du groupe comprenant les chalcogénures métalliques, en particulier les oxydes métalliques, les hydroxydes métalliques, les hydrates d'oxydes métalliques, les suboxydes métalliques et les sulfures métalliques, les fluorures métalliques, les nitrures métalliques, les carbures métalliques et leurs mélanges.

6. Pigments à lustre nacré modifiés en surface, selon la revendication 4 ou 5, **caractérisé en ce que** les substrats des pigments à lustre nacré sont revêtus d'une structure en couches multiples comprenant ou constituée d'oxydes métalliques, d'hydroxydes métalliques, de suboxydes métalliques et/ou d'hydrates d'oxydes métalliques, l'ordre des couches étant variable.

7. Pigments à lustre nacré modifiés en surface, selon la revendication 5 ou 6, **caractérisés en ce que** les substrats des pigments à lustre nacré sont revêtus d'une ou plusieurs couches d'oxydes métalliques du groupe comprenant le TiO₂, Fe₂O₃, Fe₃O₄, TiFe₂O₅, ZnO, SnO₂, CoO, CO₃O₄, ZrO₂, Cr₂O₃, VO₂, V₂O₃, (Sn,Sb)O₂ et leurs mélanges.

8. Pigments à lustre nacré modifiés en surface, selon la revendication 6, **caractérisés en ce que** la structure en couches multiples présente un ordre des couches dans lequel au moins une couche à pouvoir de réfraction élevé et au moins une couche à faible pouvoir de réfraction sont disposées en alternance sur un substrat.

9. Pigments à lustre nacré modifiés en surface, selon la revendication 6, **caractérisés en ce que** la structure en couches multiples présente un ordre des couches dans lequel au moins une couche à pouvoir de réfraction élevé et au moins une couche à faible pouvoir de réfraction et au moins une couche à pouvoir de réfraction élevée sont disposées l'une après l'autre sur un substrat.

10. Pigments à lustre nacré modifiés en surface, selon la revendication 8 ou 9, **caractérisés en ce que** au moins la couche à pouvoir de réfraction élevé présente au moins un oxyde métallique et/ou au moins un hydroxyde métallique du groupe comprenant le TiO₂, Fe₂O₃, Fe₃O₄, TiFe₂O₅, ZnO, SnO₂, CoO, Co₃O₄, ZrO₂, Cr₂O₃, VO₂, V₂O₃, (Sn,Sb)O₂ et leurs mélanges ou est constituée de ceux-ci et la couche à faible pouvoir de réfraction présente au moins un oxyde métallique et/ou au moins un hydroxyde métallique, de préférence du groupe comprenant le SiO₂, le Al₂O₃ et leurs mélanges, ou est constituée de ceux-ci.

11. Pigments à lustre nacré modifiés en surface, selon la revendication 4, **caractérisés en ce que** les pigments à lustre nacré sont des particules de verre revêtues des deux côtés de couches de métal semi-transparentes.

12. Pigments à lustre nacré modifiés en surface, selon la revendication 11, **caractérisés en ce que** les métaux des couches de métal semi-transparentes sont choisis dans le groupe comprenant l'argent, l'aluminium, le chrome, le nickel, l'or, le platine, le palladium, le cuivre, le zinc, leurs mélanges et leurs alliages.

13. Pigments à lustre nacré modifiés en surface, selon l'une des revendications 5 à 12, **caractérisés en ce que** les substrats des pigments à lustre nacré revêtus de façon enveloppante avec une ou plusieurs couches comprenant ou constituée de chalcogénure(s) métalliques, en particulier un/des oxyde(s) métallique(s), un/des hydroxyde(s) métallique(s), un/des hydrate(s) d'oxydes métalliques, un/des suboxyde(s) métallique(s) et un/des sulfure(s) métallique(s), un/des fluorure(s) métallique(s), un/des nitrure(s) métallique(s), un/des carbure(s) métalliques ou leurs mélanges, conjointement avec au moins une couche protectrice externe comprenant ou constituée d'oxyde métallique et/ou d'hydroxyde métallique et/ou d'hydrate d'oxyde métallique de métaux du groupe comprenant le silicium, l'aluminium, le cérium, le manganèse, le zirconium et leurs mélanges, dans lesquels au moins le composé organique contenant du phosphore selon la formule (I) et/ou (II) est appliqué sur la couche protectrice enveloppante externe.

14. Pigments à lustre nacré modifiés en surface, selon l'une quelconque des revendications 1 à 3, **caractérisés en ce que** les pigments à lustre nacré sont constitués d'un matériau particulaire unique, le matériau étant choisi dans le groupe constitué d'oxychlorure de bismuth, de TiO₂, de Fe₂O₃ et leurs mélanges.

15. Pigments à lustre nacré modifiés en surface, selon l'une quelconque des revendications précédentes, **caractérisés en ce que** les pigments à lustre nacré présentent une ou plusieurs couches de pigments colorés.

16. Procédé de fabrication d'un pigment à lustre nacré selon l'une quelconque des revendications 1 à 15, **caractérisés en ce que** le procédé comprend les étapes suivantes :
(a) mélange de pigments à lustre nacré présentant au moins un composé organique contenant du phosphore, de formule générale (I)
R¹R²P(O)(OR³) (I)
et/ou de formule générale (II)
R¹P(O) (OR³) (OR⁴) (II)
où
R¹ et R² sont indépendamment l'un de l'autre, un atome d'hydrogène ou un radical organique comportant 1 à 30 atomes de carbone, à condition que R¹ et R² ne soient pas en même temps un atome d'hydrogène,
R³ et R⁴ indépendamment l'un de l'autre, sont un atome d'hydrogène ou un groupe alkyle comportant 1 à 10 atomes de carbone,
dans une phase liquide,
(b) séparation des pigments à lustre nacré de la phase liquide et éventuellement, du composé organique en excédent contenant du phosphore,
(c) séchage éventuel des pigments à lustre nacré modifiés en surface.

17. Procédé selon la revendication 16, **caractérisé en ce que** la séparation du pigment à lustre nacré revêtu et du solvant s'effectue par filtration, aspiration, décantation.

18. Procédé selon la revendication 16 ou 17, **caractérisé en ce que** le séchage s'effectue de préférence à des températures élevées d'environ 40 à 100° C et éventuellement sous pression réduite.

19. Procédé selon l'une quelconque des revendications 16 à 18, **caractérisé en ce que** le solvant est un solvant dans lequel le/les acide(s) phosphonique(s) ou leurs esters sont solubles ou dispersibles et sont choisis de préférence dans le groupe comprenant l'acétate d'éthyle, l'acétate d'isopropyle, le n-propyl-acétate, l'éthanol, l'isopropanol, l'acétone et leurs mélanges.

20. Utilisation d'un pigment à lustre nacré revêtu selon l'une quelconque des revendications 1 à 15 dans des enduits, laques, encres d'impression, matières plastiques, laques en poudre ou substances de bronzage.

21. Utilisation d'un pigment à lustre nacré revêtu selon l'une quelconque des revendications 1 à 15, dans des préparations de pigments et des préparations sèches telles que des billes, des pastilles, des comprimés ou des boudins.

22. Composition de laque en poudre, **caractérisé en ce que** la laque en poudre contient des pigments à lustre nacré modifiés en surface selon l'une quelconque des revendications 1 à 15.
